# FASCICULE DE BREVET EUROPEEN

(11) **EP 4 210 889 B1**
(45) Date de publication et mention de la délivrance du brevet: **30.04.2025**
(21) Numéro de dépôt: 21773560.4
(22) Date de dépôt: 07.09.2021
(51) Int. Cl.: B23K 7/10, B23K 7/00

(54) **PROCEDE POUR L'OXYCOUPAGE DE PIECES EN METAL CONTENANT DU FER ET INSTALLATION POUR SA MISE EN OEUVRE**
VERFAHREN ZUM BRENNSCHNEIDEN VON EISENHALTIGEN METALLISCHEN WERKSTÜCKEN UND ANLAGE ZUR DURCHFÜHRUNG DES VERFAHRENS
METHOD FOR FLAME-CUTTING METAL WORKPIECES CONTAINING IRON, AND INSTALLATION FOR IMPLEMENTATION OF SAME

(30) Priorité: 07.09.2020 FR 2009048
(43) Date de publication de la demande: 19.07.2023
(73) Titulaire: EMC Conception, 54180 Heillecourt (FR)
(72) Inventeur: KALUSEVIC, Predrag, Nancy (FR); CLOVIS, Cédric, 54160 Pierreville (FR)
(74) Mandataire: Cabinet Bleger-Rhein-Poupon
(86) Numéro de dépôt international: PCT/EP2021/074618
(87) Numéro de publication internationale: WO 2022/049308

(56) Documents cités:
- FR-A- 1 009 224
- JP-A- H1 080 764
- US-A1- 2011 036 461
- ANONYMOUS: "Découpe par oxycoupage - Rocd@cier", 15 August 2017 (2017-08-15), pages 1 - 10, XP055806557, Retrieved from the Internet <URL:https://www.rocdacier.com/decoupe-par-oxycoupage/> [retrieved on 20210521]

## Description

La présente invention concerne un procédé d'oxycoupage de pièces en métal contenant du fer, dans lequel on soumet chaque pièce à une flamme de chauffe et à un jet de coupe appliqué au moyen d'une buse reliée à un chalumeau alimenté par une ligne de distribution d'un gaz X combustible sous pression et une ligne de distribution d'oxygène sous pression.

De manière connue, l'oxycoupage est un procédé industriel de découpe, par oxydation du fer contenu dans les pièces en acier, et plus généralement en matériaux ferreux, au travers d'un jet d'oxygène pur. Ce procède intègre par ailleurs une phase d'ignition, préalable à la phase de découpe proprement dite, et qui consiste à porter les pièces à couper à leur température d'inflammation, afin de créer un point d'amorçage de coupe. En somme, les équipements d'oxycoupage sont conçus de manière telle qu'avant d'exposer les pièces à couper à un jet de coupe, une flamme de chauffe est générée dans la buse reliée au chalumeau, au travers d'un mélange de gaz combustible et d'oxygène, pour soumettre les pièces à une température locale de l'ordre de 1100°C à 1300°C.

Par ailleurs, afin de guider les opérateurs lors de leurs interventions, des tableaux indiquant les valeurs préconisées de certains paramètres de coupe, pour des types de buses ou des épaisseurs de pièce données, ont été établis. En pratique, les ouvriers en charge des opérations d'oxycoupage s'appuient couramment sur ces données de référence pour procéder aux différents réglages des outillages employés.

Bien que la technologie d'oxycoupage soit bien connue en soi, il a toutefois été constaté qu'à l'heure actuelle, les différents équipements proposés par les fabricants pour sa mise en œuvre présentent un certain nombre d'inconvénients.

Ainsi, une première problématique a été identifiée, liée au fait que les installations d'oxycoupage classiques présentent toutes sensiblement une architecture identique, calquée sur celle décrite ci-dessus, et dans laquelle les lignes de distribution de fluide vers le chalumeau sont classiquement pilotées par des vannes de type « tout ou rien », au moyen desquelles tout éventuel ajustement en cours de process s'avère de mise en œuvre délicate.

A ce propos, des défauts de coupe, voire des retards de coupe pouvant aller jusqu'à l'arrêt total de la découpe, ainsi qu'une surconsommation en fluide ont été observés du fait d'une manière de procéder très classique basée sur une uniformisation des paramètres de réglages, notamment en termes de pression et de débit des fluides injectés dans le chalumeau, qui ne prennent en compte ni la nuance d'acier de la pièce à couper, ni son épaisseur, malgré l'existence de tableaux de référence. En effet, il a d'une part été constaté que ces derniers ne sont pas complets et obligent les opérateurs à effectuer des réglages empiriques pour au moins certains paramètres. D'autre part, des facteurs extérieurs, tels que par exemple la longueur des flexibles que comportent les lignes de distribution de gaz et d'oxygène, une usure intempestive des buses, la présence d'empilages de raccords, etc., peuvent impacter défavorablement le déroulement des opérations et la qualité de coupe, et ce en dépit de l'application des abaques.

De plus, les systèmes de détente de la centrale de détente sont traditionnellement réglés manuellement, et sont généralement librement accessibles par les opérateurs, ce qui est souvent à l'origine de dérives intempestives des réglages des paramètres de pression et de débit des fluides au fil du temps et des changements d'opérateur. Ces dérives dégradent inévitablement les performances de coupe et peuvent avoir pour conséquence une production de pièces de qualité non acceptable d'un point de vue industriel.

Il en va de même en ce qui concerne le réglage de la position du chalumeau par rapport à la pièce à oxycouper. Réalisé manuellement, il présente en effet un caractère hasardeux, aléatoire, inapproprié dans un environnement industriel, dans la mesure où il peut entraîner des problèmes de coupe difficiles à solutionner, leur origine ne pouvant être établie avec certitude. En outre, les procédés de l'industrie sidérurgiques, supposant le recours à des machines d'oxycoupage pour couper des pièces d'épaisseurs souvent importantes, ne permettent classiquement aucun ajustement des paramètres de fonctionnement du chalumeau en cours de processus. En d'autres termes, dans ce type d'opérations, le chalumeau doit être réglé conformément aux abaques avant le lancement des opérations de coupe, indépendamment de toute possibilité de modification ou d'intervention ultérieure en cas d'éventuel besoin.

Il a également été constaté qu'aucune installation d'oxycoupage traditionnelle ne permet actuellement de détecter d'éventuelles pertes de charges quantifiées, ou des bouchons, qui provoquent un delta de pression inconnu entre le réglage et la réalité, et d'émettre des alertes si nécessaire.

Par ailleurs, de manière classique, la flamme de chauffe est alimentée de manière identique pendant toute la durée du procédé d'oxycoupage, c'est-à-dire pendant la phase d'amorçage et celle de coupe. Or, concernant la technologie d'oxycoupage en elle-même, il a pu être observé que les besoins de chauffe varient au fil du déroulement du procédé.

Le document US 2011/0036461 (décrivant le préambule des revendications 1 et 6) aborde cette problématique et propose, pour éviter les problèmes liés à d'éventuelles projections de métal fondu en direction de la buse, de mettre en œuvre après la phase d'ignition, une première étape de perçage de la pièce à couper, en opérant à une première pression et/ou un premier débit d'oxygène puis de poursuivre la coupe à proprement parler en opérant à une seconde pression et/ou un second débit d'oxygène supérieur à la première pression et/ou le premier débit d'oxygène.

Des études portant sur les énergies développées à la fois par la flamme du chalumeau et par la réaction d'oxydation du fer, ont également pu montrer qu'une fois le processus lancé, l'énergie de cette dernière est beaucoup plus importante que celle de la chauffe. Le fait de maintenir, malgré tout, la flamme de chauffe du chalumeau à pleine puissance, engendre par conséquent un excès d'énergie, qui non seulement est susceptible de provoquer une fonte intempestive du matériau constitutif de la pièce en cours d'oxycoupage et donc un défaut de qualité, mais également une surconsommation de fluides, préjudiciable au procédé d'un point de vue économique. Par ailleurs, des problèmes liés au fait d'opérer à une pression et/ou un débit d'oxygène généralement constant pendant toute la phase de coupe ont également été observés. Or, aucune solution permettant de réguler de manière automatique aussi bien le gaz combustible que l'oxygène de coupe, en temps réel, tout au long d'un procédé d'oxycoupage, et ce conformément aux besoins requis par la pièce considérée, n'est disponible à l'heure actuelle.

Il convient en outre de noter qu'à l'heure actuelle, aucune installation d'oxycoupage n'est équipée de moyens d'émission d'alertes concernant un éventuel dysfonctionnement ou une usure de ses éléments constitutifs, pouvant conduire à une surconsommation de gaz et/ou d'oxygène mais surtout à des risques d'explosion pour l'installation et les opérateurs.

Fort de tous ces constats, le but de la présente invention est de fournir une solution permettant de pallier l'ensemble des inconvénients constatés au travers de la mise en œuvre des installations d'oxycoupage classiques de sorte à améliorer la qualité des coupes, permettre une meilleure gestion de la consommation en fluides et plus généralement optimiser les rendements de production et garantir la sécurité des opérateurs.

Un procédé d'oxycoupage de pièces en métal et une installation pour la mise en oeuvre du procédé selon l'invention sont définis dans les revendications 1 et 6 respectivement.

Des exemples préférés de l'invention sont définis dans les revendications dépendantes.

Selon le cas, le procédé selon l'invention peut comporter l'une ou plusieurs des caractéristiques suivantes :
- Pour sélectionner un programme de commande, on fournit aux moyens de pilotage automatique aux moyens de sélection automatique au moins une information parmi le groupe comprenant les informations relatives à la nature du métal constituant la pièce à oxycouper, à l'épaisseur de la pièce à oxycouper, à la nature d'une phase du procédé d'oxycoupage, au type de buse employé et à une température de la pièce à atteindre, au moyen d'une interface utilisateur.

L'on active des moyens d'émission d'une alerte lorsque les données relevées en temps réel s'écartent d'un intervalle défini autour des consignes de pilotage du programme sélectionné.
- L'on enregistre les données reçues en temps réel dans les moyens-mémoire des moyens de pilotage automatique et on les exploite pour activer des moyens de planification automatique d'opérations de maintenance.
- L'on contrôle, de manière automatisée et en temps réel, la présence d'une flamme au niveau du chalumeau.

Selon le cas, cette installation peut comprendre l'une ou plusieurs des caractéristiques suivantes :
- Les moyens-mémoire des moyens de pilotage automatique sont conçus aptes à stocker des moyens de traitement des données mesurées par et reçues des capteurs d'informations, et des moyens de détection de la position du chalumeau par rapport à ladite pièce, lesdits moyens de traitement consistant en au moins une application logicielle exécutée :
   dans un mode apprentissage, préalablement à toute opération d'oxycoupage, pour enregistrer dans lesdits moyens-mémoire au moins un programme de commande des lignes de distribution de gaz combustible sous pression, de distribution d'oxygène sous pression et des moyens de déplacement du chalumeau, ledit programme de commande mettant en œuvre des consignes de pilotage basées sur des paramètres optimums prédéterminés,
   et ultérieurement, pendant une opération d'oxycoupage,
   dans un mode exécutif pour activer des moyens de sélection automatique d'un programme de commande et provoquer l'envoi, par des moyens de transmission d'informations que comportent les moyens de pilotage automatique, de consignes de pilotage correspondantes vers des moyens de réception que comportent l'ensemble d'organes de réglage et/ou vers des moyens de réception que comportent les moyens de déplacement du chalumeau, et dans un mode comparatif pour comparer les données mesurées par et reçues des capteurs d'informations et des moyens de détection de la position du chalumeau par rapport à ladite pièce, avec les consignes de pilotage du programme de commande sélectionné, et activer des moyens de régulation des organes de réglage et provoquer l'envoi, par les moyens de transmission d'informations de consignes de régulation vers les moyens de réception que comportent les organes de réglage et/ou vers les moyens de réception que comportent les moyens de déplacement du chalumeau si au moins une des données mesurées et reçues s'écarte d'un intervalle défini autour des consignes de pilotage.
- Les capteurs d'informations comportent des capteurs de débit disposés en amont d'une centrale de détente, sur l'entrée de fluide de chacune des lignes de distribution d'oxygène sous pression et de distribution de gaz combustible sous pression.
- Les capteurs d'informations comportent des capteurs de débit intégrés dans une centrale de détente et disposés sur chacune desdites sorties de fluide, en aval d'un organe de réglage.
- Les organes de réglage comportent au moins une électrovanne proportionnelle et/ou un détendeur pour chaque ligne de distribution de fluide.
- Les moyens de pilotage automatique comportent ou sont reliés à une interface utilisateur.
- Elle comporte un automate programmable relié aux moyens de pilotage automatique par des moyens de transmission d'informations filaires ou non filaires.
- Elle comporte des moyens d'allumage automatique à distance du chalumeau.
- Elle comporte des moyens de détection de la présence d'une flamme dans le chalumeau.

La description est à lire en relation avec les dessins annexés dans lesquels :
[Fig.1] est une vue schématique d'une variante de réalisation de l'installation selon l'invention, comportant un unique chalumeau et une boucle de régulation en pression, et

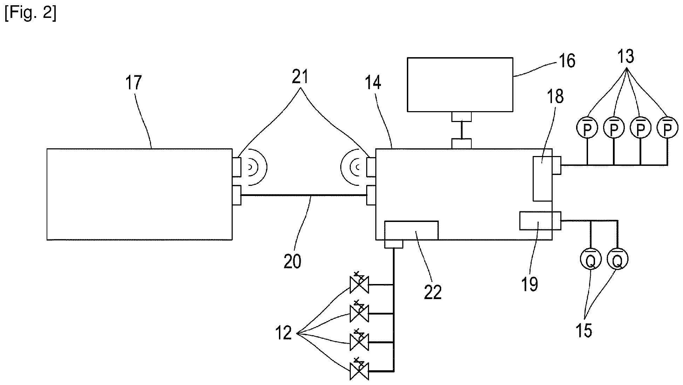

[Fig.2] illustre plus en détails les composants électroniques de l'installation de la figure 1.

Comme indiqué ci-dessus, la présente invention concerne un procédé et une installation 1 pour l'oxycoupage de pièces 2 en métal contenant du fer, tel que plus particulièrement les pièces en acier non allié ou faiblement allié, mais également les pièces en fonte ou acier inoxydable, etc.

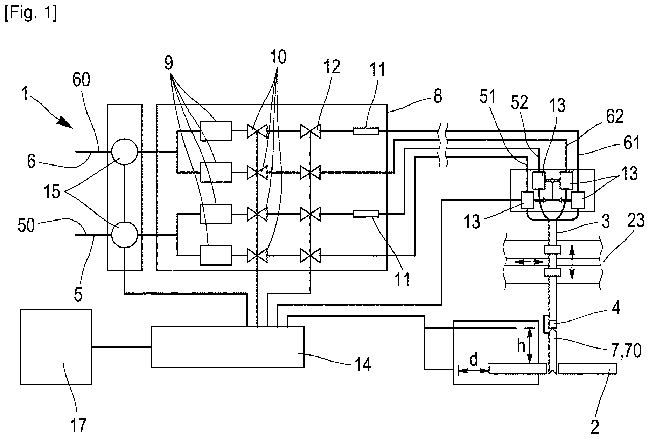

En référence à la figure 1, l'installation 1 comporte de manière classique un chalumeau 3, muni d'une buse d'oxycoupage 4, destiné à être approvisionné en oxygène sous pression et/ou en un gaz combustible sous pression, tel que par exemple du gaz naturel, au moyen respectivement d'une ligne de distribution 5, et d'une ligne de distribution 6, reliées chacune à une centrale de détente 8 qui permet de dispatcher les fluides.

Plus précisément, les lignes 5, 6 présentent chacune une entrée 50, 60 de fluide, reliées à la centrale de détente 8 et au moins deux sorties 51, 52, 61, 62 de fluide, reliées au chalumeau 3. Dans l'exemple illustré, les sorties 52, 61 des lignes 5, 6 sont destinées à la formation, dans le chalumeau 3, du mélange oxygène/gaz combustible permettant de former la flamme de chauffe 7. La sortie 51 permet d'envoyer dans le chalumeau 3 l'oxygène du jet de coupe 70, tandis que la sortie 62 permet d'y injecter du gaz combustible destiné à produire une flamme de chauffe apte à venir, le cas échéant, en renfort au jet de coupe au cours de la phase de coupe.

Par ailleurs, la centrale de détente 8 intègre de manière classique des organes de détente 9 placés sur les sorties de fluide 51, 52, 61, 62, de même que des organes de réglage, tels que par exemple des électrovannes 10 de type « tout ou rien » et un ensemble d'électrovannes proportionnelles 12. Chacune des sorties 52, 61 est en outre équipée d'un pare-flamme 11 permettant de stopper la flamme si nécessaire.

Il est également à noter que l'installation 1 comporte en outre des moyens d'allumage automatique à distance du chalumeau 3 permettant une mise en œuvre de ce dernier en toute sécurité. De plus, des moyens de déplacement 23 du chalumeau 3 permettant de placer celui-ci à une position optimale par rapport à la pièce 2, puis de le déplacer le long de celle-ci au fur et à mesure du déroulement du procédé d'oxycoupage à une certaine vitesse, à une hauteur constante ou variable. Il est précisé que la position optimale s'entend aussi bien en termes de hauteur h du chalumeau 3 par rapport à la pièce 2, que de distance d du bord de cette dernière lors du démarrage du process et tout au long de celui-ci.

L'installation 1 comporte en outre des moyens de pilotage automatique, logés dans un boîtier 14, et conçus aptes à piloter à distance et de manière automatisée l'ensemble des éléments constitutifs de l'installation 1, à partir de consignes de pilotage, intégrées dans au moins un programme de commande stocké dans des moyens-mémoire des moyens de pilotage automatique, et basées sur des paramètres optimums initialement prédéterminés.

En d'autres termes, conformément à l'invention, la mise en œuvre de l'installation 1 s'effectue au travers d'une sélection, réalisée par des moyens de sélection automatique, d'au moins un programme de commande permettant un envoi de consignes de pilotage très fines aux lignes de distribution 6 de gaz combustible sous pression, de distribution 5 d'oxygène sous pression ainsi qu'aux moyens de déplacement 23 du chalumeau 3.

Comme indiqué ci-dessus, les consignes de pilotage propres au programme de commande sélectionné sont basées sur une détermination préalable de l'ensemble des paramètres optimums pour l'opération considérée. De manière avantageuse, ces paramètres optimums concernent la pression et le débit de gaz combustible et d'oxygène dans leurs lignes de distribution 5, 6 respectives, ainsi que la position et la vitesse de déplacement du chalumeau 3 par rapport à la pièce 2 à oxycouper. Ils correspondent en outre aux valeurs conduisant aux meilleurs résultats pour un type donné de métal constituant la pièce 2, et/ou une épaisseur donnée de la pièce 2, et/ou un instant t donné du procédé d'oxycoupage, et/ou un type donné de buse 4, et/ou à une température recherchée de la pièce 2.

Dès lors, contrairement aux procédés d'oxycoupage classiques, les éléments constitutifs de l'installation 1 ne sont pas directement contrôlés par les opérateurs, mais au travers d'un programme de commande, déterminé par les moyens de sélection automatique sur la base d'une fourniture préalable aux moyens de pilotage automatique 14, via une interface utilisateur 16, d'au moins une information parmi le groupe comprenant les informations relatives à la nature du métal constituant la pièce 2 à oxycouper, à l'épaisseur de la pièce 2 à oxycouper, à un instant donné du procédé d'oxycoupage, au type de buse 4 employé, ou à une température donnée de la pièce 2 à maintenir.

Ainsi, les consignes transmises aux différents éléments constitutifs de l'installation 1 reposeront sur une détermination préalable de l'ensemble de paramètres optimaux spécifiquement adaptés à une situation donnée et non pas sur un choix parfois arbitraire effectué par un opérateur.

Il est précisé qu'à cet effet, les moyens-mémoire des moyens de pilotage automatique 14 sont conçus aptes à stocker au moins une application logicielle exécutée dans un mode apprentissage, préalablement à toute opération d'oxycoupage, pour enregistrer dans lesdits moyens-mémoire au moins un programme de commande tel que décrit ci-dessus, et ultérieurement, pendant une opération d'oxycoupage, dans un mode exécutif pour activer les moyens de sélection d'un programme de commande et provoquer l'envoi, par des moyens de transmission d'informations 22 que comportent les moyens de pilotage automatique 14, des consignes de pilotage du programme sélectionné vers des moyens de réception que comportent les vannes 10, 12 et/ou vers des moyens de réception que comportent les moyens de déplacement 23 du chalumeau 3.

Il est à noter que dans la variante de réalisation illustrée, l'installation 1 comporte un automate programmable 17 permettant à un opérateur d'entrer, comme indiqué ci-dessus au moins une information relative à l'opération d'oxycoupage prévue, à savoir au moins une information relative à la nature du métal constituant la pièce 2 à oxycouper, ou à l'épaisseur de la pièce 2 à oxycouper, ou à un instant donné du procédé d'oxycoupage, au type de buse 4 employé, ou à la température de la pièce 2 à préserver tout au long du processus. La, ou les informations entrées, seront alors transmises aux moyens de pilotage automatique 14 reliés à l'automate 17 par des moyens de transmission d'informations filaires 20, ou non filaires 21, puis traitées par l'application logicielle. Selon une alternative, l'installation 1 peut comporter à ce propos, une interface utilisateur 16 reliée ou intégrée au boîtier hébergeant les moyens de pilotage automatique 14.

D'autre part, la présente invention prévoit également la possibilité de réguler en temps réel à tout moment et de manière automatique tous les éléments constitutifs de l'installation 1.

A cet effet, les lignes 5, 6 de distribution d'oxygène sous pression et de distribution de gaz combustible sous pression comportent chacune un capteur de pression 13 disposé sur leurs sorties 51, 52, 61, 62, à proximité immédiate du chalumeau 3, ainsi qu'un capteur de débit 15 disposé sur leurs entrées respectives 50, 60, en amont de la centrale de détente 8. De même, les moyens de déplacement 23 du chalumeau 3 comportent des moyens de détection de la position du chalumeau 3. De plus, les capteurs de pression 13 et de débit 15 ainsi que les moyens de détection de la position du chalumeau 3 sont pourvus de moyens de transmission en temps réel de données vers des moyens 18, 19 de réception de données que comportent les moyens de pilotage automatique 14.

Par ailleurs, dans cet objectif, l'application logicielle décrite ci-dessus est prévue apte à être exécutée également dans un mode comparatif pour comparer les données mesurées par et reçues des capteurs de pression et de débit 13, 15 et des moyens de détection de la position du chalumeau 3 par rapport à la pièce 2, avec les consignes de pilotage du programme de commande sélectionné, et activer des moyens de régulation pour provoquer l'envoi, par les moyens de transmission d'informations 22 de consignes de régulation vers les moyens de réception que comportent les vannes 10, 12 et/ou vers les moyens de réception que comportent les moyens de déplacement 23 du chalumeau 3 si au moins une des données mesurées et reçues s'écarte d'un intervalle défini autour desdites consignes de pilotage.

En d'autres termes, le procédé selon l'invention permet une régulation automatique et en temps réel de la pression et du débit des fluides circulant dans les lignes de distribution 5, 6, de même qu'un éventuel repositionnement automatique, par exemple par translation horizontale et/ou verticale, du chalumeau 3 vers une position optimale par rapport à la pièce 2. De même, une modification de la vitesse de déplacement du chalumeau 3 par rapport à la pièce 2 peut être commandée.

Il est encore à noter que l'installation selon l'invention également équipée de moyens de mesure de la température de la pièce 2 à chaque instant du procédé d'oxycoupage, ces moyens étant conçus aptes à transmettre vers et recevoir des données des moyens de pilotage automatique 14. Ainsi, leur mise en œuvre permet également une régulation de l'installation 1 qui tienne compte d'une éventuelle évolution intempestive de la température de la pièce 2 en cours d'oxycoupage, pour agir sur l'alimentation selon le cas en gaz de chauffe ou en oxygène de coupe.

Grâce à la structure qui vient d'être décrite, l'installation selon l'invention permet un pilotage automatisé ainsi qu'une régulation fine et automatisée d'un procédé d'oxycoupage, au travers de la mise en œuvre de moyens de détermination de l'ensemble des paramètres de travail optimums pour une opération donnée, et d'une automatisation de la gestion des réglages de la chauffe et de la coupe du chalumeau 3, pour aboutir à une découpe adaptée et idéale quelle que soit le type de métal ferreux dont est constituée la pièce 2, l'épaisseur de celle-ci, le type de buse 4 employé ou la phase du procédé d'oxycoupage. Pour cela, l'installation 1 dispose d'une boucle de contrôle fermée, permettant de fixer une consigne à une ligne 5, 6 de distribution de fluide, tandis que des capteurs de données autorisent une comparaison entre les données de consignes et des données relevées en temps réel, pour autoriser une régulation en conséquence et en temps réel des éléments constitutifs de l'installation 1.

Les capteurs de débit 15, installés en amont de la centrale de détente 8, sur chaque entrée 50, 60 de fluide permettent par ailleurs avantageusement de fournir les consommations de l'installation 1 en temps réel et un déclenchement de moyens d'émission d'alertes le cas échéant.

L'ensemble des capteurs de pression 13 et de débit 15 permettent également le déclenchement d'alertes lorsque des valeurs anormales, susceptibles d'être provoquées par des usures dans l'installation 1 telles que des fuites, des bouchons, ou une buse endommagée, sont détectées au niveau du boîtier de régulation 14. Ces alertes permettent avantageusement l'intervention rapide des opérateurs. Le procédé selon l'invention prévoit en outre d'enregistrer les données reçues en temps réel dans les moyens-mémoire des moyens de pilotage automatique 14 et de les exploiter pour activer des moyens de planification automatique d'opérations de maintenance préventives, augmentant ainsi la sécurité de l'installation 1.

Des moyens de détection en temps réel de la présence d'une flamme dans le chalumeau 3 sont également prévus, permettant également de contribuer à renforcer la sécurité de l'installation 1.

En d'autres termes, grâce à son architecture, l'installation 1 selon l'invention, offre une réponse aux inconvénients susmentionnés concernant les équipements et les procédés d'oxycoupage actuels. Elle permet un pilotage automatique et une régulation fine, prenant en compte le type de métal ferreux à découper, notamment en termes de nuance d'acier ou d'épaisseur, mais aussi la nature de la buse 4 utilisée pour le découper, ou encore la température de la pièce à atteindre, et les différentes phases du procédé d'oxycoupage. Elle permet en outre d'optimiser la hauteur du chalumeau 3, d'éviter les dérives dans le temps des réglages étant donné que les opérateurs ne peuvent plus les modifier et qu'ils sont ajustés automatiquement si nécessaire pour respecter les abaques. L'installation selon l'invention permet également de varier les besoins en chauffe au fil de la mise en œuvre du processus d'oxycoupage. En outre, les pertes de charge du réseau sont prises en compte car les capteurs de débit 15 et de pression 13 sont positionnés au plus près du matériau et l'usure des équipements est aussi gérée par la régulation. Ceci a pour effet direct de jouer sur la qualité des semi-produits créés, de proposer un gain matière au niveau de la coupe mais aussi un gain de consommation sur les gaz employés.

Il convient encore de noter que la structure de l'installation selon l'invention, bien qu'ayant été décrite en lien avec un unique chalumeau 3, peut être adaptée pour convenir à une mise en œuvre avec une pluralité de chalumeaux 3 et présenter les mêmes avantages.

## Revendications

1. Procédé d'oxycoupage de pièces (2) en métal contenant du fer, dans lequel on soumet chaque pièce (2) à une flamme de chauffe et à un jet de coupe appliqué au moyen d'une buse (4) reliée à un chalumeau (3), ledit chalumeau (3) étant alimenté par une ligne de distribution (6) d'un gaz combustible sous pression et une ligne de distribution (5) d'oxygène sous pression, et étant contrôlé par des moyens de déplacement du chalumeau par rapport à chaque pièce à oxycouper, **caractérisé par** les étapes suivantes :
- Mise en œuvre de moyens de détermination des paramètres optimums en termes de pression et de débit de gaz combustible et d'oxygène ainsi qu'en termes de position et de vitesse de déplacement du chalumeau (3) par rapport à la pièce (2) à oxycouper, en fonction de la nature du métal constituant la pièce (2) et d'une épaisseur de la pièce (2) et des différentes phases du procédé d'oxycoupage et du type de buse (4) employé et d'une température donnée de la pièce (2) à atteindre,
- Réalisation d'au moins un programme de commande des lignes de distribution (6) de gaz combustible sous pression et de distribution (5) d'oxygène sous pression ainsi que de moyens de déplacement (23) du chalumeau (3), ledit programme prévoyant des consignes de pilotage basées sur une mise en œuvre des paramètres optimums prédéterminés,
- Stockage, dans des moyens-mémoire de moyens de pilotage automatique (14), d'au moins un programme de commande des lignes de distribution (6) de gaz combustible sous pression et de distribution (5) d'oxygène sous pression et des moyens de déplacement du chalumeau (3),
- Mise en œuvre de moyens de sélection automatique d'au moins un programme de commande et mise en œuvre de moyens d'envoi automatique des consignes de pilotage correspondantes aux lignes de distribution (5) de gaz combustible sous pression, de distribution (6) d'oxygène sous pression ainsi qu'aux moyens de déplacement (23) du chalumeau (3) ;
- relevé en temps réel de la pression du gaz combustible et de l'oxygène sous pression à proximité immédiate du chalumeau et du débit du gaz combustible et de l'oxygène sous pression et de la température de la pièce (2) et de la position et de la vitesse du chalumeau par rapport à la pièce (2) ;
- fourniture des données relevées aux moyens de pilotage automatique (14) en vue d'une vérification de la correspondance entre la ou les données relevées et les consignes de pilotage du programme de commande sélectionné et ;
- le cas échéant, lorsque la/les données relevée(s) s'écarte(nt) d'un intervalle défini autour des consignes de pilotage, régulation de la pression et/ou du débit de la ligne de distribution de gaz combustible, et/ou de la ligne de distribution d'oxygène sous pression, et/ou de la position et/ou de la vitesse de déplacement du chalumeau (3) par rapport à la pièce (2) à oxycouper, de manière à ramener la donnée correspondante dans l'intervalle défini.

2. Procédé selon la revendication 1, **caractérisé en ce que** pour sélectionner un programme de commande, on fournit aux moyens de sélection automatique au moins une information parmi le groupe comprenant les informations relatives à la nature du métal constituant la pièce (2) à oxycouper, à l'épaisseur de la pièce (2) à oxycouper, à la nature d'une phase du procédé d'oxycoupage, au type de buse (4) employé, et à une température de la pièce (2) à atteindre, au moyen d'une interface utilisateur (16).

3. Procédé selon l'une quelconque des revendications précédentes, **caractérisé en ce que** l'on active des moyens d'émission d'une alerte lorsque les données relevées en temps réel s'écartent d'un intervalle défini autour des consignes de pilotage du programme sélectionné.

4. Procédé selon l'une quelconque des revendications précédentes, **caractérisé en ce que** l'on enregistre les données reçues en temps réel dans les moyens-mémoire des moyens de pilotage automatique (14) et on les exploite pour activer des moyens de planification automatique d'opérations de maintenance.

5. Procédé selon l'une quelconque des revendications précédentes, **caractérisé en ce que** l'on contrôle, de manière automatisée et en temps réel, la présence d'une flamme au niveau du chalumeau (3).

6. Installation (1) pour la mise en œuvre du procédé d'oxycoupage de pièces (2) en métal contenant du fer selon l'une quelconque des revendications 1 à 5, comportant au moins un chalumeau (3) muni d'une buse (4) d'oxycoupage, une ligne (5) de distribution d'oxygène sous pression, et une ligne (6) de distribution d'un gaz combustible sous pression, lesdites lignes (5, 6) présentant chacune une entrée (50, 60) de fluide et au moins deux sorties (51, 52, 61, 62) de fluide reliées audit chalumeau (3) pour former une flamme de chauffe (7) et un jet de coupe (70), et étant contrôlées par un ensemble d'organes de réglages (10, 12) ainsi que des moyens de déplacement (23) du chalumeau (3) par rapport à chaque pièce (2) à oxycouper, **caractérisée en ce qu'**elle comporte : - des moyens de détermination des paramètres optimums ;
- des moyens de pilotage automatique (14) comprenant des moyens mémoire stockant au moins un programme de commande et des moyens (18, 19) de réception de données, et des moyens de traitement de données, les moyens de pilotage automatique (14) conçus aptes à piloter de manière automatisée et à distance lesdites lignes de distribution (6) de gaz combustible sous pression et de distribution (5) d'oxygène sous pression ainsi que lesdits moyens de déplacement (23) du chalumeau (3), à partir de consignes de pilotage, basées sur des paramètres optimums, d'une part, qui ont été initialement prédéterminés par les moyens de détermination des paramètres optimums, et en fonction de la nature du métal constituant la pièce (2) et d'une épaisseur de la pièce (2) et des différentes phases du procédé d'oxycoupage et du type de buse (4) employé et d'une température donnée de la pièce (2) à atteindre, et, d'autre part, qui sont intégrées dans ledit au moins un programme de commande stocké dans les moyens-mémoire desdits moyens de pilotage automatique (14) ;
- les moyens de déplacement (23) du chalumeau (3) comportent des moyens de détection de la position du chalumeau (3) par rapport à ladite pièce (2) à oxycouper, et l'installation (1) comporte des moyens de mesure de la température de la pièce (2), tandis que lesdites lignes (5, 6) de distribution d'oxygène sous pression et de distribution de gaz combustible sous pression comportent chacune un ensemble de capteurs d'informations (13, 15) qui comportent des capteurs de pression (13) disposés à proximité immédiate du chalumeau (3) et **en ce que** les moyens de détection de la position du chalumeau par rapport à ladite pièce (2), les moyens de mesure de la température de la pièce (2), et les capteurs d'informations sont pourvus de moyens de transmission de données en temps réel vers des moyens (18, 19) de réception de données
- **en ce que** les moyens de pilotage automatique (14) sont conçus aptes à contrôler à distance des moyens de régulation automatique desdites lignes de distribution(6) de gaz combustible sous pression et de distribution (5) d'oxygène sous pression ainsi que desdits moyens de déplacement (23) du chalumeau (3), à partir des données relevées en temps réel et comparées aux consignes de pilotage du programme de commande par les moyens de traitement de données des moyens de pilotage automatique (14).

7. Installation (1) selon la revendication 6, **caractérisée en ce que** les moyens-mémoire des moyens de pilotage automatique (14) sont conçus aptes à stocker des moyens de traitement des données mesurées par et reçues des capteurs d'informations (13, 15), et des moyens de détection de la position du chalumeau par rapport à ladite pièce (2), lesdits moyens de traitement consistant en au moins une application logicielle exécutée :
- dans un mode apprentissage, préalablement à toute opération d'oxycoupage, pour enregistrer dans lesdits moyens-mémoire au moins un programme de commande des lignes de distribution (6) de gaz combustible sous pression, de distribution (5) d'oxygène sous pression et des moyens de déplacement (23) du chalumeau (3), ledit programme de commande mettant en œuvre des consignes de pilotage basées sur des paramètres optimums prédéterminés,
et ultérieurement, pendant une opération d'oxycoupage,
- dans un mode exécutif pour activer des moyens de sélection automatique d'un programme de commande et provoquer l'envoi, par des moyens de transmission d'informations (22) que comportent les moyens de pilotage automatique (14), des consignes de pilotage correspondantes vers des moyens de réception que comportent l'ensemble d'organes de réglage (10, 12) et/ou vers des moyens de réception que comportent les moyens de déplacement (23) du chalumeau (3), et dans un mode comparatif pour comparer les données mesurées par et reçues des capteurs d'informations (13, 15) et des moyens de détection de la position du chalumeau (3) par rapport à ladite pièce (2), avec les consignes de pilotage du programme de commande sélectionné, et activer des moyens de régulation des organes de réglage (10, 12) et provoquer l'envoi, par les moyens de transmission d'informations (22) de consignes de régulation vers les moyens de réception que comportent les organes de réglage (10, 12) et/ou vers les moyens de réception que comportent les moyens de déplacement (23) du chalumeau (3) si au moins une des données mesurées et reçues s'écarte d'un intervalle défini autour des consignes de pilotage.

8. Installation (1) selon l'une quelconque des revendications 6 ou 7, **caractérisée en ce que** les capteurs d'informations comportent des capteurs de débit (15) disposés en amont d'une centrale de détente (8), sur l'entrée (50, 60) de fluide de chacune des lignes (5, 6) de distribution d'oxygène sous pression et de distribution de gaz combustible sous pression.

9. Installation (1) selon l'une quelconque des revendications 6 ou 7, **caractérisée en ce que** les capteurs d'informations comportent des capteurs de débit (15) intégrés dans une centrale de détente (8) et disposés sur chacune desdites sorties de fluide (51, 52, 61, 62), en aval d'un organe de réglage (12).

10. Installation selon l'une quelconque des revendications 6 9, **caractérisée en ce que** les organes de réglage comportent au moins une électrovanne (12) et/ou détendeur pour chaque ligne (5, 6) de distribution de fluide.

11. Installation (1) selon l'une quelconque des revendications 6 à 10, **caractérisée en ce que** les moyens de pilotage automatique (14) comportent ou sont reliés à une interface utilisateur (16).

12. Installation (1) selon l'une quelconque des revendications 6 à 11, caractérisée en qu'elle comporte un automate programmable (17) relié aux moyens de pilotage automatique (14) par des moyens de transmission d'informations filaires (20) ou non filaires (21).

13. Installation selon l'une quelconque des revendications 6 à 12, **caractérisée en ce qu'**elle comporte des moyens d'allumage automatique à distance du chalumeau (3).

14. Installation selon l'une quelconque des revendications 6 à 13, **caractérisée en ce qu'**elle comporte des moyens de détection de la présence d'une flamme dans le chalumeau (3).

## Patentansprüche

1. Verfahren zum Brennschneiden von Teilen (2) aus eisenhaltigem Metall, wobei jedes Teil (2) einer Heizflamme und einem Schneidstrahl ausgesetzt wird, der mittels einer Düse (4) angewendet wird, die mit einem Schweißbrenner (3) verbunden ist, wobei der Schweißbrenner (3) durch eine Leitung (6) zum Verteilen von unter Druck stehendem brennbarem Gas und eine Leitung (5) zum Verteilen von unter Druck stehendem Sauerstoff versorgt wird und durch Mittel zum Bewegen des Schweißbrenners relativ zu jedem zu brennschneidenden Teil kontrolliert wird, **gekennzeichnet durch** die folgenden Schritte:
- Implementieren von Mitteln zum Bestimmen der optimalen Parameter hinsichtlich Druck und Durchflussrate von brennbarem Gas und Sauerstoff sowie hinsichtlich Position und Bewegungsgeschwindigkeit des Schweißbrenners (3) relativ zu dem zu brennschneidenden Teil (2), in Abhängigkeit von der Art des Metalls, das das Teil (2) bildet, und einer Dicke des Teils (2) und den unterschiedlichen Phasen des Brennschneidprozesses und des Typs der eingesetzten Düse (4) und einer zu erreichenden gegebenen Temperatur des Teils (2),
- Erstellen von mindestens einem Programm zum Regeln der Leitungen (6) zum Verteilen von unter Druck stehendem brennbarem Gas und der Leitungen (5) zum Verteilen von unter Druck stehendem Sauerstoff sowie der Mittel (23) zum Bewegen des Schweißbrenners (3), wobei das Programm Steueranweisungen basierend auf einer Implementierung der vorbestimmten optimalen Parameter vorsieht,
- Speichern, in Speichermitteln von Mitteln (14) zum automatischen Steuern, von mindestens einem Programm zum Regeln der Leitungen (6) zum Verteilen von unter Druck stehendem brennbarem Gas und zum Verteilen (5) von unter Druck stehendem Sauerstoff sowie der Mittel zum Bewegen des Schweißbrenners (3),
- Implementieren von Mitteln zum automatischen Auswählen von mindestens einem Regelungsprogramm und Implementieren von Mitteln zum automatischen Senden der entsprechenden Steueranweisungen an die Leitungen (5) zum Verteilen von unter Druck stehendem brennbarem Gas, die Leitungen (6) zum Verteilen von unter Druck stehendem Sauerstoff sowie an die Mittel (23) zum Bewegen des Schweißbrenners (3);
- Erfassen in Echtzeit des Drucks des brennbaren Gases und des unter Druck stehenden Sauerstoffs in unmittelbarer Nähe des Schweißbrenners und der Durchflussrate des brennbaren Gases und des unter Druck stehenden Sauerstoffs und der Temperatur des Teils (2) und der Position und der Geschwindigkeit des Schweißbrenners relativ zu dem Teil (2);
- Bereitstellen der erfassten Daten an die Mittel (14) zum automatischen Steuern im Hinblick auf eine Überprüfung der Entsprechung zwischen den erfassten Daten und den Steueranweisungen des ausgewählten Regelungsprogramms, und;
- gegebenenfalls, wenn das/die erfasste(n) Datum/Daten von einem definierten Intervall um die Steueranweisungen herum abweicht/abweichen, Regulieren des Drucks und/oder der Durchflussrate der Leitung zum Verteilen von brennbarem Gas und/oder der Leitung zum Verteilen von unter Druck stehendem Sauerstoff und/oder der Position und/oder der Bewegungsgeschwindigkeit des Schweißbrenners (3) relativ zu dem zu brennschneidenden Teil (2), um die entsprechenden Daten in das definierte Intervall zurückzubringen.

2. Verfahren nach Anspruch 1, **dadurch gekennzeichnet, dass** den Mitteln zum automatischen Auswählen zum Auswählen eines Regelungsprogramms mindestens eine Information aus der Gruppe bereitgestellt wird, aufweisend Informationen über die Art des Metalls, das das zu brennschneidende Teil (2) bildet, über die Dicke des zu brennschneidenden Teils (2), über die Art einer Phase des Brennschneidverfahrens, über den Typ der eingesetzten Düse (4) und über eine zu erreichende Temperatur des Teils (2), mittels einer Benutzerschnittstelle (16).

3. Verfahren nach einem der vorstehenden Ansprüche,
**dadurch gekennzeichnet, dass** Mittel zum Aussenden einer Warnung aktiviert werden, wenn die in Echtzeit erfassten Daten von einem definierten Intervall um die Steueranweisungen des ausgewählten Programms herum abweichen.

4. Verfahren nach einem der vorstehenden Ansprüche,
**dadurch gekennzeichnet, dass** die in Echtzeit empfangenen Daten in den Speichermitteln der Mittel (14) zum automatischen Steuern aufgezeichnet werden und zum Aktivieren von Mitteln zum automatischen Planen von Wartungsvorgängen ausgewertet werden.

5. Verfahren nach einem der vorstehenden Ansprüche,
**dadurch gekennzeichnet, dass** das Vorhandensein einer Flamme an dem Schweißbrenner (3) automatisch und in Echtzeit kontrolliert wird.

6. Anlage (1) zum Implementieren des Verfahrens zum Brennschneiden von Teilen (2) aus eisenhaltigem Metall nach einem der Ansprüche 1 bis 5, die mindestens einen Schweißbrenner (3), der mit einer Brennschneiddüse (4) versehen ist, eine Leitung (5) zum Verteilen von unter Druck stehendem Sauerstoff und eine Leitung (6) zum Verteilen von unter Druck stehendem brennbarem Gas umfasst, wobei die Leitungen (5, 6) jeweils einen Fluideinlass (50, 60) und mindestens zwei Fluidauslässe (51, 52, 61, 62), die mit dem Schweißbrenner (3) verbunden sind, zum Ausbilden einer Heizflamme (7) und eines Schneidstrahls (70) vorweisen, und durch eine Anordnung von Einstellorganen (10, 12) sowie Mittel (23) zum Bewegen des Schweißbrenners (3) relativ zu jedem zu brennschneidenden Teil (2) kontrolliert werden, **dadurch gekennzeichnet, dass** sie umfasst:
- Mittel zum Bestimmen der optimalen Parameter;
- Mittel (14) zum automatischen Steuern, aufweisend Speichermittel, die mindestens ein Regelungsprogramm speichern, und Mittel (18, 19) zum Empfangen von Daten und Mittel zum Verarbeiten von Daten, wobei die Mittel (14) zum automatischen Steuern geeignet ausgelegt sind, um die Leitungen (6) zum Verteilen von unter Druck stehendem brennbarem Gas und die Leitungen (5) zum Verteilen von unter Druck stehendem Sauerstoff sowie die Mittel (23) zum Bewegen des Schweißbrenners (3) anhand von Steueranweisungen automatisch und entfernt steuern zu können, die einerseits auf optimalen Parametern basieren, die anfänglich durch die Mittel zum Bestimmen der optimalen Parameter vorbestimmt wurden, und in Abhängigkeit von der Art des Metalls, das das Teil (2) bildet, und einer Dicke des Teils (2) und den unterschiedlichen Phasen des Brennschneidprozesses und des Typs der eingesetzten Düse (4) und einer zu erreichenden gegebenen Temperatur des Teils (2), und die andererseits in das mindestens eine Regelungsprogramm integriert sind, das in den Speichermitteln der Mittel (14) zum automatischen Steuern gespeichert ist;
- wobei die Mittel (23) zum Bewegen des Schweißbrenners (3) Mittel zum Erkennen der Position des Schweißbrenners (3) relativ zu dem zu brennschneidenden Teil (2) umfassen und die Anlage (1) Mittel zum Messen der Temperatur des Teils (2) umfasst, während die Leitungen (5, 6) zum Verteilen von unter Druck stehendem Sauerstoff und zum Verteilen von unter Druck stehendem brennbarem Gas jeweils eine Anordnung von Informationssensoren (13, 15) umfassen, die Drucksensoren (13) umfassen, die in unmittelbarer Nähe des Schweißbrenners (3) angeordnet sind, und **dass** die Mittel zum Erkennen der Position des Schweißbrenners relativ zu dem Teil (2), die Mittel zum Messen der Temperatur des Teils (2) und die Informationssensoren mit Mitteln zum Übertragen von Daten in Echtzeit an die Mittel (18, 19) zum Empfangen von Daten ausgestattet sind;
- **dass** die Mittel (14) zum automatischen Steuern geeignet ausgelegt sind, um Mittel zum automatischen Regulieren der Leitungen (6) zum Verteilen von unter Druck stehendem brennbarem Gas und zum Verteilen von unter Druck stehendem Sauerstoff (5) sowie der Mittel (23) zum Bewegen des Schweißbrenners (3) anhand von Daten entfernt steuern zu können, die in Echtzeit erfasst und durch die Datenverarbeitungsmittel der Mittel (14) zum automatischen Steuern mit den Steueranweisungen des Regelungsprogramms verglichen werden.

7. Anlage (1) nach Anspruch 6, **dadurch gekennzeichnet, dass** die Speichermittel der Mittel (14) zum automatischen Steuern geeignet ausgelegt sind, um Mittel zum Verarbeiten der Daten, die durch die Informationssensoren (13, 15) gemessen und empfangen werden, und Mittel zum Erkennen der Position des Schweißbrenners relativ zu dem Teil (2) zu speichern, wobei die Verarbeitungsmittel aus mindestens einer ausgeführten Softwareanwendung bestehen: - in einem Lernmodus, vor jedem Brennschneidvorgang in den Speichermitteln, zum Aufzeichnen in den Speichermitteln mindestens eines Programms zum Steuern der Leitungen (6) zum Verteilen von unter Druck stehendem brennbarem Gas, der Leitungen (5) zum Verteilen von unter Druck stehendem Sauerstoff und der Mittel (23) zum Bewegen des Schweißbrenners (3), wobei das Regelungsprogramm Steueranweisungen basierend auf zuvor bestimmten optimalen Parameter implementiert, und anschließend, während eines Brennschneidvorgangs,
- in einem Ausführungsmodus zum Aktivieren von Mitteln zum automatischen Auswählen eines Regelungsprogramms und Veranlassen des Sendens, durch Informationsübertragungsmittel (22), die von den Mitteln (14) zum automatischen Steuern umfasst sind, von entsprechenden Steueranweisungen an Empfangsmittel, die von der Anordnung von Einstellorganen (10, 12) umfasst sind, und/oder an Empfangsmittel, die von den Mitteln (23) zum Bewegen des Schweißbrenners (3) umfasst sind, und in einem Vergleichsmodus zum Vergleichen der Daten, die durch die Informationssensoren (13, 15) und die Mittel zum Erfassen der Position der Fackel (3) relativ zu dem Teil (2) gemessen und empfangen werden, mit den Steueranweisungen des ausgewählten Regelungsprogramms, und Aktivieren von Mitteln zum Regulieren der Einstellorgane (10, 12) und Veranlassen des Sendens, durch die Informationsübertragungsmittel (22), von Regulierungsanweisungen an die Empfangsmittel, die von den Einstellorganen (10, 12) umfasst sind und/oder an die Empfangsmittel, die von den Mitteln (23) zum Bewegen des Schweißbrenners (3) umfasst sind, falls mindestens eines von den gemessenen und den empfangenen Daten von einem definierten Intervall um die Steueranweisungen herum abweicht.

8. Anlage (1) nach einem der Ansprüche 6 oder 7,
**dadurch gekennzeichnet, dass** die Informationssensoren Durchflusssensoren (15) umfassen, die stromaufwärts einer Druckminderungszentrale (8) an dem Fluideinlass (50, 60)jeder der Leitungen (5, 6) zum Verteilen von unter Druck stehendem Sauerstoff und zum Verteilen von unter Druck stehendem brennbarem Gas angeordnet sind.

9. Anlage (1) nach einem der Ansprüche 6 oder 7,
**dadurch gekennzeichnet, dass** die Informationssensoren Durchflusssensoren (15) umfassen, die in eine Druckminderungszentrale (8) integriert und an jedem der Fluidauslässe (51, 52, 61, 62) stromabwärts eines Einstellorgans (12) angeordnet sind.

10. Anlage nach einem der Ansprüche 6 bis 9, **dadurch gekennzeichnet, dass** die Einstellorgane mindestens ein Magnetventil (12) und/oder einen Druckminderer für jede Fluidverteilungsleitung (5, 6) umfassen.

11. Anlage (1) nach einem der Ansprüche 6 bis 10,
**dadurch gekennzeichnet, dass** die Mittel (14) zum automatischen Steuern eine Benutzerschnittstelle (16) umfassen oder mit einer solchen verbunden sind.

12. Anlage (1) nach einem der Ansprüche 6 bis 11,
**dadurch gekennzeichnet, dass** sie einen programmierbaren Automaten (17) umfasst, der über verdrahtete (20) oder nicht verdrahtete (21) Informationsübertragungsmittel mit den Mitteln (14) zum automatischen Steuern verbunden ist.

13. Anlage nach einem der Ansprüche 6 bis 12,
**dadurch gekennzeichnet, dass** sie Mittel für eine automatische Fernzündung des Schweißbrenners (3) umfasst.

14. Anlage nach einem der Ansprüche 6 bis 13,
**dadurch gekennzeichnet, dass** sie Mittel zum Erkennen des Vorhandenseins einer Flamme in dem Schweißbrenner (3) umfasst.

## Claims

1. Method for flame-cutting metal workpieces (2) containing iron, wherein each workpiece (2) is subjected to a heating flame and a cutting jet applied by means of a nozzle (4) connected to a blowtorch (3), said blowtorch (3) being fed by a pressurized fuel gas supply line (6) and a pressurized oxygen supply line (5) and being controlled by means for moving the blowtorch relative to each workpiece to be flame-cut, **characterized by** the following steps:
- implementing means for determining optimum parameters in terms of the pressure and flow rate of the fuel gas and of the oxygen and in terms of the position and speed of movement of the blowtorch (3) relative to the workpiece (2) to be flame-cut, based on the nature of the metal of which the workpiece (2) is made, and a thickness of the workpiece (2), and different phases of the flame-cutting method, and the type of nozzle (4) employed, and a given temperature of the workpiece (2) to be reached,
- executing at least one program for controlling the pressurized fuel gas supply line (6) and the pressurized oxygen supply line (5) and means (23) for moving the blowtorch (3), said program providing control setpoints based on implementing the predetermined optimum parameters,
- storing, in memory means, means (14) for automatically running at least one program for controlling the pressurized fuel gas line (6) and the pressurized oxygen supply line (5) and the means for moving the blowtorch (3),
- implementing means for automatically selecting at least one control program, and implementing means for automatically sending corresponding control setpoints to the pressurized fuel gas supply line (5), the pressurized oxygen supply line (6) and the means (23) for moving the blowtorch (3);
- recording the pressure of the fuel gas and pressurized oxygen in the immediate vicinity of the blowtorch and the flow rate of the fuel gas and of the pressurized oxygen and the temperature of the workpiece (2) and the position and speed of the blowtorch relative to the workpiece (2) in real time;
- supplying the recorded data to the automatic-running means (14) to verify whether the read data and the control setpoints of the selected control program correspond, and;
- if necessary, when the measured data deviate from a defined interval around the control setpoints, regulating the pressure and/or the flow rate of the fuel gas supply line and/or of the pressurized oxygen supply line, and/or the position and/or the speed of movement of the blowtorch (3) relative to the workpiece (2) to be flame-cut, so as to bring the corresponding data within the defined interval.

2. Method according to claim 1, **characterized in that,** to select a control program, the automatic-selection means are provided with at least one item of information from the group comprising the information relating to the nature of the metal of which the workpiece (2) to be flame-cut is made, the thickness of the workpiece (2) to be flame-cut, the nature of a phase of the flame-cutting method, the type of nozzle (4) employed, and a temperature of the workpiece (2) to be reached, by means of a user interface (16).

3. Method according to either of the preceding claims, **characterized in that** means for sending an alert are activated when the data recorded in real time deviate from a defined interval around the control setpoints of the selected program.

4. Method according to any of the preceding claims, **characterized in that** the data received in real time are saved in the memory means of the automatic-running means (14) and are used to activate means for automatically planning maintenance operations.

5. Method according to any of the preceding claims, **characterized in that** the presence of a flame at the blowtorch (3) is checked automatically and in real time.

6. Installation (1) for implementing the method for flame-cutting metal workpieces (2) containing iron according to any of claims 1 to 5, comprising at least one blowtorch (3) provided with a flame-cutting nozzle (4), a pressurized oxygen supply line (5), and a pressurized fuel gas supply line (6), said lines (5, 6) each having a fluid inlet (50, 60) and at least two fluid outlets (51, 52, 61, 62) connected to said blowtorch (3) to form a heating flame (7) and a cutting jet (70), and being controlled by a set of adjustment members (10, 12) as well as means (23) for moving the blowtorch (3) relative to each workpiece (2) to be flame-cut, **characterized in that** it comprises:
- means for determining optimum parameters;
- automatic-running means (14) comprising memory means which store at least one control program and means (18, 19) for receiving data, and data processing means, the automatic-running means (14) being designed to automatically and remotely run said pressurized fuel gas supply line (6) and pressurized oxygen supply line (5)and said means (23) for moving the blowtorch (3) using control setpoints based on optimum parameters which have been initially predetermined by the means for determining optimum parameters, and based on the nature of the metal of which the workpiece (2) is made, and a thickness of the workpiece (2), and different phases of the flame-cutting method, and the type of nozzle (4) employed, and a given temperature of the workpiece (2) to be reached, and which are integrated into said at least one control program stored in the memory means of said automatic-running means (14);
- the means (23) for moving the blowtorch (3) comprise means for detecting the position of the blowtorch (3) relative to said workpiece (2) to be flame-cut, and the installation (1) comprises means for measuring the temperature of the workpiece (2), while said pressurized oxygen and pressurized fuel gas supply lines (5, 6) each comprise a set of information sensors (13, 15) which comprise pressure sensors (13) arranged in the immediate vicinity of the blowtorch (3) **and in that** the means for detecting the position of the blowtorch relative to said workpiece (2), the means for measuring the temperature of the workpiece (2) and the information sensors are provided with means for transmitting data in real time to data receiving means (18, 19);
- **in that** the automatic-running means (14) are designed to remotely control the means for automatically adjusting said pressurized fuel gas supply line (6) and pressurized oxygen supply line (5) and said means (23) for moving the blowtorch (3) using data recorded in real time and compared to the control setpoints of the control program by the data processing means of the automatic-running means (14).

7. Installation (1) according to claim 6, **characterized in that** the memory means of the automatic-running means (14) are designed to store means for processing the data measured by and received from the information sensors (13, 15), and the means for detecting the position of the blowtorch relative to said workpiece (2), said processing means consisting of at least one software application executed: - in a learning mode, prior to any flame-cutting operation, in order to record in said memory means at least one program for controlling the pressurized fuel gas supply line (6), the pressurized oxygen supply line (5) and the means (23) for moving the blowtorch (3), said control program implementing control setpoints based on predetermined optimum parameters, and subsequently, during a flame-cutting operation,
- in an executive mode for activating means for automatically selecting a control program and causing information transmission means (22) comprised in the automatic-running means (14) to send corresponding control setpoints to receiving means comprised in the set of adjustment members (10, 12) and/or to receiving means comprised in the means (23) for moving the blowtorch (3), and in a comparative mode for comparing the data measured by and received from the information sensors (13, 15) and the means for detecting the position of the blowtorch (3) relative to said workpiece (2) with the control setpoints of the selected control program, and activating the means for regulating the adjustment members (10, 12) and causing the means for transmitting information (22) to send control setpoints to the receiving means comprised in the adjustment members (10, 12) and/or to the receiving means comprised in the means (23) for moving the blowtorch (3), if at least one item of the measured and received data deviates from a defined interval around the control setpoints.

8. Installation (1) according to either claim 6 or claim 7,
**characterized in that** the information sensors comprise flow rate sensors (15) arranged upstream of an expansion unit (8), on the fluid inlet (50, 60) of each of the pressurized oxygen and fuel gas supply lines (5, 6).

9. Installation (1) according to either claim 6 or claim 7,
**characterized in that** the information sensors comprise flow rate sensors (15) integrated into an expansion unit (8) and arranged on each of said fluid outlets (51, 52, 61, 62), downstream of an adjustment member (12).

10. Installation according to any of claims 6 to 9, **characterized in that** the adjustment members comprise at least one solenoid valve (12) and/or expansion valve for each fluid supply line (5, 6).

11. Installation (1) according to any of claims 6 to 10, **characterized in that** the automatic-running means (14) comprise or are connected to a user interface (16).

12. Installation (1) according to any of claims 6 to 11, **characterized in that** it comprises a programmable logic controller (17) connected to the automatic-running means (14) by wired (20) or non-wired (21) information transmission means.

13. Installation according to any of claims 6 to 12, **characterized in that** it comprises automatic-ignition means remote from the blowtorch (3).

14. Installation according to any of claims 6 to 13, **characterized in that** it comprises means for detecting the presence of a flame in the blowtorch (3).
